# EUROPÄISCHE PATENTSCHRIFT

(11) **EP 0 748 097 B1**
(45) Veröffentlichungstag und Bekanntmachung des Hinweises auf die Patenterteilung: **22.10.2003**
(21) Anmeldenummer: 96108954.7
(22) Anmeldetag: 04.06.1996
(51) Int. Cl.: H04M 1/02

(54) **Halterung für ein Display innerhalb einer Fernsprechstation**
Holding device for a display inside a telephone set
Fixation pour un affichage à l'intérieur d'un poste téléphonique

(30) Priorität: 08.06.1995 DE 29509414 U
(43) Veröffentlichungstag der Anmeldung: 11.12.1996
(73) Patentinhaber: SIEMENS AKTIENGESELLSCHAFT, 80333 München (DE)
(72) Erfinder: Benning, Johannes, Dipl.-Ing., 46325 Borken (DE); Reuschel, Jürgen, 46399 Bocholt (DE)

(56) Entgegenhaltungen:
- EP-A- 0 503 427
- DE-A- 3 706 739
- DE-U- 9 006 248
- DE-U- 9 203 193
- DE-U- 9 318 401
- US-A- 4 113 342
- US-A- 4 813 642

## Beschreibung

Die vorliegende Erfindung beinhaltet eine innerhalb einer Fernsprechstation angeordnete Displayhalterung, die im zusammengebauten Zustand der Station zwischen an der Bodenwanne angeordneten Rippen und einer Sichtfläche am Gehäuseoberteil geklemmt gehaltert ist.

Eine derartige Halterung ist durch das DE-GM 93 18 401 bekannt. Bei dieser Ausführungsform sind mehrere mit der Bodenwanne der Fernsprechstation verbundene Rippen so angeordnet, daß das in einer Halterung eingebrachte Display zwischen ihnen fixiert ist und im zusammengebauten Zustand der Fernsprechstation unter leichter Vorspannung in eine Ausnehmung im Bereich des Gehäuseoberteils gedrückt wird. Eine derartige Montage des Displayhalters läßt sich jedoch nur für einen Gerätetyp anwenden, da das Einklemmen des Displays von dem Abstand zwischen der Bodenwanne und dem Gehäuseoberteil bestimmt wird.

Im Zuge der Rationalisierung von Fernsprechstationen ist es jedoch erwünscht, eine für verschiedene Gerätetypen einheitliche Displayhalterung zu schaffen, die so gestaltet ist, daß sie in Fernsprechstationen mit unterschiedlichen Bauhöhen und Neigungswinkeln des Anzeigebereichs einsetzbar ist.

Diese Forderung wird dadurch erfüllt, daß die Halterung als Displayständer ausgebildet ist, der an seiner der Sichtfläche abgewandten Fläche Positionierdome aufweist, die zur klemmbaren Halterung des Displayständers zwischen den Rippen und dem Gehäuseoberteil dienen, wobei bei gleichbleibenden Abmessungen des Displayständers zum Ausgleich unterschiedlicher Bauhöhen zwischen der Bodenwanne und dem Gehäuseoberteil die Rippen an der Bodenwanne bezüglich ihrer Höhe und Neigung unterschiedlich ausgebildet sind.

Derartige Displayständer sind z. B. durch das DE-GM 92 03 193 bekannt. Sie sind in der Weise aufgebaut, daß sie aus durchsichtigem Material bestehen, wobei innerhalb der Halterung eine von einer Seite der Halterung frei zugängliche Aufnahme vorgesehen ist, in die das Display einschiebbar und mittels einer Rastverbindung gehalten ist. Der Displayständer ist mit mehreren und eine vorgegebene Länge aufweisenden Rastelementen versehen, die mit der ihn aufnehmenden Leiterplatte eine Rastverbindung eingehen. Auch diese Ausführungsform ist nur für einen bestimmten Gerätetyp von Fernsprechstationen verwendbar.

Bei der erfindungsgemäß gestalteten Halterung für ein Display wurde von dem Prinzip abgewichen, den Displayständer auf der Leiterplatte durch eine Rastverbindung zu sichern. Die zur klemmbaren Aufnahme dienenden und an der Bodenwanne vorgesehenen Rippen liegen dabei unter Vorspannung an den Positionierdomen an und drücken das Bauteil im zusammengesetzten Zustand der Fernsprechstation gegen das Gehäuseoberteil. Durch eine entsprechende Gestaltung der Rippen bezüglich ihrer Höhe bzw. ihrer an den Positionierdomen anliegenden Neigungsfläche können einmal unterschiedliche Bauhöhen sowie die im Gehäuseoberteil vorgesehenen Neigung der Anzeigefläche verwirklicht werden. Somit läßt sich ein für alle ein Display aufweisenden Gerätetypen einheitlicher Displayständer in unterschiedliche Höhen und Neigungswinkel in ihrer Bedienoberfläche aufweisende Fernsprechstationen einbauen, wobei lediglich für den jeweiligen Gerätetyp die mit der Bodenwanne einstückig verbundenen Rippen entsprechend gestaltet werden müssen. Durch eine derartige Ausbildung der Displayhalterung lassen sich insbesondere bei Massenprodukten erhebliche Kosten bezüglich der Herstellung und der Montage einsparen.

Um eine sichere Fixierung des Displayständers durch die an der Bodenwanne angeordneten Rippen zu gewährleisten, können die als Stege gestalteten Rippen in Nuten eingreifen, die jeweils in den freien Endbereichen der Positionierdome vorgesehen sind. Hierbei kann von einem Montageprinzip Gebrauch gemacht werden, bei dem zunächst das umgekehrt unten liegende Gehäuseoberteil mit dem Displayständer bestückt wird und anschließend die Bodenwanne in der Weise aufgesetzt wird, daß die Rippen in die Nuten der Positionierdome eingreifen und den Displayständer an das Gehäuseoberteil andrücken.

Um eine exakte Lagefixierung des Displayständers auch im Bereich der Sichtfläche zu erzielen, kann gemäß einer weiteren Ausgestaltung der Erfindung die Sichtfläche von Rippen begrenzt werden, die im Inneren des Gehäuseoberteils angeordnet sind. Durch derartige Rippen kann eine eindeutige Lagepositionierung des Displayständers geschaffen werden.

Nach einer weiteren Ausbildung der Erfindung können die Positionierdome in ihrer Längsrichtung mit Rastelementen versehen werden, die mit den freien Endbereichen der Positionierdome verbunden sind und in nutartige und in Längsrichtung der Positionierdome verlaufende Vertiefungen einfedern. Diese Rastverbindung kann vorzugsweise dann zur Anwendung gelangen, wenn die Displayhalterung zu Transportzwecken und zur Lagehalterung auf der später verwendeten Leiterplatte befestigt werden soll. Hierbei durchgreifen die Positionierdome Durchbrüche in der Leiterplatte und gelangen mit ihren Rastelementen hinter der Leiterplatte zur Anlage. In diesem Zustand kann eine bekannte Kontaktverbindung zwischen dem Display und der Leiterplatte mittels einer Kontaktfolie hergestellt werden. Hierbei wird die Kontaktfolie in ihren Kontaktbahnen aufweisenden Endbereichen mit einem Kontaktkleber versehen. Anschließend werden diese vorbereiteten Endbereiche der Kontaktfolie durch einen zeitlich kurzen Stempeldruck und unter Hitzeeinwirkung mit den zugeordneten Kontakten auf dem Display und auf der Leiterplatte verbunden.

Die vorliegende Erfindung soll im folgenden anhand von Ausführungsbeispielen näher erläutert werden.

Es zeigen
Figur 1 eine teilweise geschnittene Seitenansicht eines innerhalb einer Fernsprechstation gehalterten Displayständers,
Figur 2 die Gestaltung eines am Displayständer angeordneten Positionierdoms in einer perspektivischen Ansicht,
Figur 3 den Positionierdom nach Figur 2 in einer Seitenansicht,
Figur 4 und Figur 5 den Einbau des Displayständers in eine unterschiedliche Bauhöhe aufweisende schnurgebundene Fernsprechstationen,
Figur 6 die Befestigung des Displayständers mit der Leiterplatte während seines Transportes bis zu seinem endgültigen Einbau in die Fernsprechstation.

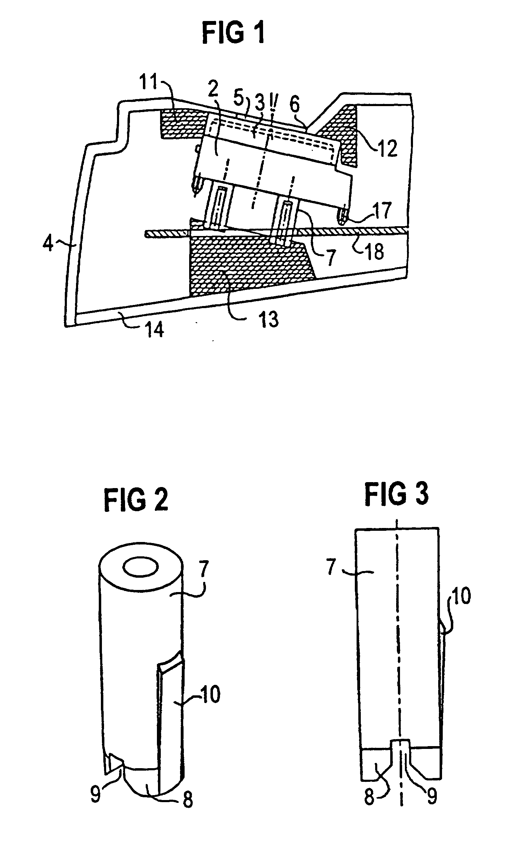

Der in den Figuren dargestellte Displayständer 1 nimmt in einem durchsichtigen Gehäuse 2 ein Display 3 auf. Der Displayständer 1 ist dabei so innerhalb der Fernsprechstation angeordnet, daß sich die Anzeigefläche des Displays 3 unterhalb einer in dem Gehäuseoberteil 4 angeordneten Aussparung oder mit einer Abdeckung 5 versehenen Aussparung 6 befindet. An der der Anzeigefläche des Displays abgewandten Seite weist der Displayständer Positionierdome 7 auf. Diese Positionierdome 7 sind einstückig in einem Endbereich mit dem Displayständer 1 verbunden. Wie aus den Figuren 2 und 3 ersehen werden kann, weisen die Positionierdome 7 in ihrem anderen Endbereich 8 eine Nut 9 auf. In der Längsrichtung des Positionierdomes 7 ist weiterhin ein Rastelement 10 angeordnet, das im freien Endbereich 8 des Positionierdoms 7 einstückig mit dem Dom verbunden ist und in eine in Längsrichtung des Doms 7 vorgesehene Nut einzufedern vermag. Dabei sind die Einlaufbereiche der Nut 9 abgeschrägt gestaltet.

Wie der Figur 1 weiterhin zu entnehmen ist, sind mit dem Gehäuseoberteil 4 sowie mit der Bodenwanne 14 Rippen 11 und 12 sowie 13 einstückig verbunden, zwischen denen im zusammengebauten Zustand der Fernsprechstation der Displayständer gehalten ist. Während die eine Lagepositionierung bewirkenden und an dem Gehäuseoberteil 4 angeordneten und als schmale Stege gestalteten Rippen 11 und 12 bei unterschiedliche Bauhöhen aufweisenden Fernsprechstationen stets gleichbleibend ausgebildet sein können, sind die an der Bodenwanne 14 angeordneten Rippen 13 bezüglich ihrer Höhe und Neigung den unterschiedlichen Bauhöhen und Neigungswinkeln zwischen der Bodenwanne 14 und dem Gehäuseoberteil 4 angepaßt, d. h., bei Verwendung eines einheitlichen Displayständers 1 läßt sich dieser lediglich durch Anpassung der an der Bodenwanne vorgesehenen Rippen 13 universell einsetzen. Hierbei greifen jeweils die Rippen 13 an der Bodenwanne 14 in die Nuten 9 der Positionierdome 7 ein und drücken im zusammengesetzten Zustand der Fernsprechstation den Displayständer gegen das Gehäuseoberteil.

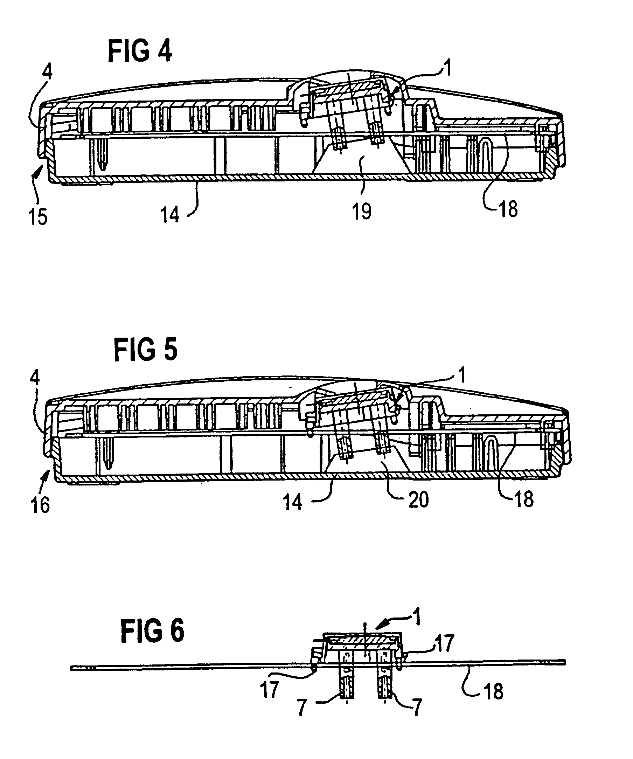

Die Figuren 4 und 5 offenbaren verschiedene Einbauhöhen zwischen dem Gehäuseoberteil 4 und der Bodenwanne 14 der Fernsprechstationen 15 bzw. 16.

Bei der in Figur 4 dargestellten Fernsprechstation 15 ist der Abstand zwischen dem Gehäuseoberteil 4 und der Bodenwanne 14 größer als bei der in Figur 5 gezeigten Ausführungsform. Aus diesem Grund ist bei gleichen Displayständerabmessungen die Höhe und die Neigung der jeweiligen Rippen 19 bzw. 20 an der Bodenwanne 14 unterschiedlich ausgebildet.

In Figur 6 ist die Befestigung des Displayständers mit der Leiterplatte während des Transportes bis zu seiner endgültigen Befestigung innerhalb der Fernsprechstation gezeigt.

Hierbei sind - wie bei den Figuren 1, 4 und 5 - an dem Displayständer 1 weiterhin Positionierstifte 17 zu erkennen, die ebenfalls an der der Anzeigefläche abgewandten Fläche des Displayständers 1 angeordnet sind. Diese Positionierstifte 17 dienen dazu, die der Kontaktierung des Displays 3 mit der Leiterplatte 18 dienende und hier nicht näher dargestellte Kontaktfolie festzulegen. Die Kontaktierung dieser Folie mit dem Display 3 und der Leiterplatte 18 erfolgt in bekannter Weise mittels eines Kontaktklebers, der jeweils in den Endbereichen der Kontaktfolie aufgebracht ist und durch einen zeitlich kurzen Stempeldruck und unter Hitzeeinwirkung die Verbindung der Folienkontakte mit den ihnen zugeordneten Kontakten auf dem Display 3 sowie der Leiterplatte 18 bewirkt. Zur Halterung des Displayständers 1 auf der Leiterplatte 18 durchgreifen die Positionierdome 7 entsprechende Durchbrüche in der Leiterplatte 18, wobei im eingebrachten Zustand des Displayständers 1 die Rastelemente 10 an den Positionierdomen die Leiterplatte hintergreifen und den Displayständer während des Transportes auf der Leiterplatte 18 sichern.

Der Einbau des Displayständers in die Fernsprechstation 15 bzw. 16 erfolgt in der Weise, daß der Displayständer 1 mit der Leiterplatte in das unten liegende Gehäuseoberteil 4 eingelegt wird. Aufgrund der relativ schwachen Verrastung zwischen den Positionierdomen und der Leiterplatte kann in einfacher Weise bei Aufsetzen der Bodenwanne 14 bzw. beim Einbringen der an der Bodenwanne 14 vorgesehenen Rippen 13 in die Nuten 9 der Positionierdome 7 die Rastverbindung zwischen der Leiterplatte 18 und dem Displayständer 1 gelöst werden. Dabei nehmen der Displayständer 1 sowie die mit dem Display kontaktierte Leiterplatte 18 im zusammengesetzten Zustand von Gehäuseoberteil 4 und Bodenwanne 14 ihre endgültige Lage ein.

## Patentansprüche

1. Innerhalb einer Fernsprechstation (15, 16) angeordnete Displayhalterung (1), die im zusammengebauten Zustand der Station (15, 16) zwischen an der Bodenwanne (14) angeordneten Rippen (13, 19, 20) und einer Sichtfläche am Gehäuseoberteil (4) geklemmt gehaltert ist, **dadurch gekennzeichnet, daß** die Halterung als Displayständer (1) gestaltet ist, der an seiner der Sichtfläche abgewandten Fläche Positionierdome (7) aufweist, die zur klemmbaren Halterung des Displayständers (1) zwischen den Rippen (13, 19, 20) und dem Gehäuseoberteil dienen, wobei bei gleichbleibenden Abmessungen des Displayständers (1) zum Ausgleich unterschiedlicher Bauhöhen zwischen der Bodenwanne (14) und dem Gehäuseoberteil (4) die Rippen (13, 19, 20) an der Bodenwannne (14) bezüglich ihrer Höhe und Neigung unterschiedlich ausgebildet sind.

2. Displayhalterung nach Anspruch 1, **dadurch gekennzeichnet, daß** die Positionierdome (7) in ihrem freien Endbereich (8) Nuten (9) zur Aufnahme der an der Bodenwanne (14) angeordneten Rippen (13, 19, 20) aufweisen.

3. Displayhalterung nach Anspruch 1, **dadurch gekennzeichnet, daß** die Sichtfläche im Gehäuseoberteil (4) von im Inneren der Station (15, 16) angeordneten Rippen (11, 12) begrenzt wird.

4. Displayhalterung nach Anspruch 1, **dadurch gekennzeichnet, daß** die Positionierdome (7) in ihrer Längsrichtung mit Rastelementen (10) versehen sind, die mit dem freien Endbereich (8) der Positionierdome (7) verbunden sind und in nutartige und in Längsrichtung der Positionierdome (7) verlaufende Vertiefungen einfedern.

5. Displayhalterung nach Anspruch 1, **dadurch gekennzeichnet, daß** der Displayständer (1) zu Transportzwecken auf einer Leiterplatte (18) mittels der Positionierdome (7) gehaltert wird, wobei die Positionierdome im eingesteckten Zustand Durchbrüche mit ihren Rastelementen (10) hintergreifen.

## Claims

1. Display holding device (1) which is arranged inside a telephone set (15, 16) and, in the assembled state of the set (15, 16), is held clamped between ribs (13, 19, 20) arranged on the bottom tray (14) and a visible face on the upper housing part (4), **characterized in that** the holding device is designed as a display stand (1), which has, on its face remote from the visible face, positioning pins (7) which serve for holding the display stand (1) in such a way that it can be clamped between the ribs (13, 19, 20) and the upper housing part, the ribs (13, 19, 20) on the bottom tray (14) being formed differently with respect to their height and inclination, with the dimensions of the display stand (1) remaining constant, to compensate for different overall heights between the bottom tray (14) and the upper housing part (4).

2. Display holding device according to Claim 1, **characterized in that** the positioning pins (7) have in their free end region (8) grooves (9) for receiving the ribs (13, 19, 20) arranged on the bottom tray (14).

3. Display holding device according to Claim 1, **characterized in that** the visible face in the upper housing part (4) is bounded by ribs (11, 12) arranged in the interior of the set (15, 16).

4. Display holding device according to Claim 1, **characterized in that** the positioning pins (7) are provided in their longitudinal direction with latching elements (10), which are connected to the free end region (8) of the positioning pins (7) and resiliently deflect into groove-like depressions running in the longitudinal direction of the positioning pins (7).

5. Display holding device according to Claim 1, **characterized in that**, for transporting purposes, the display stand (1) is held by means of the positioning pins (7) on a printed circuit board (18), the positioning pins, in the inserted state, reaching with their latching elements (10) through apertures.

## Revendications

1. Fixation d'écran (1), placée à l'intérieur d'un poste téléphonique (15, 16) et maintenue serrée, dans l'état assemblé du poste (15, 16), entre des nervures (13, 19, 20), apportées sur la cuvette de base (14), et une surface de visualisation, prévue dans la partie supérieure du boîtier (4), **caractérisée par le fait que** la fixation est conçue sous la forme d'un socle d'écran (1) comportant, sur sa face opposée à la surface de visualisation, des dômes de positionnement (7) qui servent à la fixation par serrage du socle d'écran (1) entre les nervures (13, 19, 20) et la partie supérieure du boîtier, les nervures (13, 19, 20) sur la cuvette de base (14) étant conçues, en ce qui concerne leur hauteur et leur inclinaison, de façons différentes pour compenser, pour des dimensions constantes du socle d'écran (1), des hauteurs constructives différentes entre la cuvette de base (14) et la partie supérieure du boîtier (4).

2. Fixation d'écran selon la revendication 1 **caractérisée par le fait que** les dômes de positionnement (7) comportent, à leur extrémité libre (8), des gorges (9) destinées à recevoir les nervures (13, 19, 20) disposées sur la cuvette de base (14).

3. Fixation d'écran selon la revendication 1 **caractérisée par le fait que** la surface de visualisation dans la partie supérieure du boîtier (4) est limitée par des nervures (11, 12) disposées à l'intérieur du poste (15, 16).

4. Fixation d'écran selon la revendication 1 **caractérisée par le fait que** les dômes de positionnement (7) sont munis, dans le sens de leur longueur, d'éléments d'encliquetage (10), qui sont liés à l'extrémité libre (8) des dômes de positionnement (7) et qui s'engagent en faisant ressort dans des évidements à forme de rainure se développant dans le sens de la longueur des dômes de positionnement (7).

5. Fixation d'écran selon la revendication 1 **caractérisée par le fait que** le socle d'écran (1) est maintenu, à des fins de transport, au moyen des dômes de positionnement (7), sur une carte à circuits imprimés (18), les dômes de positionnement s'engageant, dans l'état enfiché, dans des traversées, à l'aide de leurs éléments d'encliquetage (10).
